**Europäisches Patentamt**

**European Patent Office**

**Office européen des brevets**

(11) Veröffentlichungsnummer: **0 022 925**
**B1**

# (12) EUROPÄISCHE PATENTSCHRIFT

(45) Veröffentlichungstag der Patentschrift:
23.06.82

(21) Anmeldenummer: **80103213.7**

(22) Anmeldetag: **10.06.80**

(51) Int. Cl.³: **A 01 N 25/30**, A 01 N 47/30 //
(A01N47/30, 39/02, 37/34)

(54) Isoproturon enthaltende flüssige Herbizide und deren Verwendung in einem Verfahren zur Unkrautbekämpfung.

(30) Priorität: **16.06.79 DE 2924403**

(43) Veröffentlichungstag der Anmeldung:
**28.01.81 Patentblatt 81/4**

(45) Bekanntmachung des Hinweises auf die Patenterteilung:
**23.06.82 Patentblatt 82/25**

(84) Benannte Vertragsstaaten:
**AT BE CH DE FR GB IT LI NL SE**

(56) Entgegenhaltungen:
**BE-A-645 136**
**DE-A-1 945 100**
**US-A-3 397 051**

(73) Patentinhaber: **HOECHST AKTIENGESELLSCHAFT,
Postfach 80 03 20, D-6230 Frankfurt/Main 80 (DE)**

(72) Erfinder: **Albrecht, Konrad, Dr., Sodener Strasse 64,
D-6233 Kelkheim (Taunus) (DE)**
Erfinder: **Heinz, Frensch, Dr., Oestricher Weg 33,
D-6000 Frankfurt am Main 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Isoproturon enthaltende flüssige Herbizide und deren Verwendung in einem Verfahren zur Unkrautbekämpfung

Die vorliegende Erfindung betrifft flüssige, herbizide Mittel in Form von wäßrigen, lagerungsstabilen Suspensionskonzentraten, die auch bei höheren Temperaturen gut gießfähig bleiben und als Wirkstoff Isoproturon oder Mischungen aus Isoproturon mit Ioxynil, Bromoxynil, Mecoprop oder Salzen der letzteren drei Wirkstoffe und als Formulierungshilfsmittel ein Alkalisalz eines Kondensationsproduktes aus einem sulfogruppenhaltigen Phenol und Formaldehyd oder aus einem Phenol, Alkalisulfit und Formaldehyd, sowie Alkalisalze oder gegebenenfalls Ammoniumsalze bzw. Aminsalze von Alkylpolyglykolätherphosphat-Partialestern enthalten, wobei letztere den Suspensionskonzentraten im Temperaturbereich von 10 bis 70°C einen Temperatur-Viskositätskoeffizienten von etwa 0,6 bis 0,95 verleihen, berechnet auf Temperatursteigerungen in 20°C-Intervallen, so daß die Viskositäten der Suspensionskonzentrate mit ansteigender Temperatur reversibel abnehmen.

Isoproturon [3-(4-Isopropylphenyl)-1,1-dimethylharnstoff] ist ein bekanntes Herbizid, das zur Bekämpfung von kleinsamigen Schadgräsern (Ackerfuchsschwanz, Windhalm) sowie Vogelmiere und Kamillearten im jungen Entwicklungsstadium eingesetzt wird. Zwecks Verbreitung des herbiziden Wirkungsspektrums haben sich Zumischungen der ebenfalls bekannten Wirkstoffe Ioxynil [4-Hydroxy-3,5-dijodbenzonitril], Bromoxynil [3,5-Dibrom-4-hydroxybenzonitril] und Mecoprop [2-(4-Chlor-2-methylphenoxy)-propionsäure] als vorteilhaft erwiesen. Man kann dadurch mit nur einer Applikation gleichzeitig mehrere Unkräuter bekämpfen. So können durch Beifügen von Ioxynil und Bromoxynil zu Isoproturon zusätzlich Taubnessel, Ehrenpreis und Stiefmütterchen erfaßt werden. Mischpräparate von Isoproturon und Mecoprop können zusätzlich gegen Klettenlabkraut eingesetzt werden. Die herbizide Wirkung derartiger Wirkstoffkombinationen ist bekannt (vgl. z. B. DE-OS 2 343 985; ferner Cole und Horsnail, Proceedings 1976, Vol. 1, British Crop Protection conference-Weeds, S. 111 – 113).

Im allgemeinen werden Pestizid-Wirkstoffe z. B. in Form von emulgierbaren Konzentraten, Spritzpulvern sowie von Suspensionskonzentraten angewandt. Wirkstoffe, die in technischen Lösungsmitteln schwer löslich sind, wie beispielsweise Isoproturon, werden im allgemeinen z. B. in Form von Spritzpulvern zur Anwendung gebracht. Zur Herstellung von Spritzpulvern werden jedoch kostspielige Mahl- und Filteranlagen und oftmals teure synthetische Kieselsäuren als Trägerstoffe benötigt. Spritzpulver haben den Nachteil, sich schlecht abmessen bzw. dosieren zu lassen und sie stäuben bei der Handhabung. Der Anwender kann durch solche staubenden Zubereitungen leicht kontaminiert werden und Schaden nehmen. Wirkstoffe, die in Form von löslichen Alkali- oder Ammoniumsalzen in Spritzpulvermischungen enthalten sind, wirken zudem häufig stark ätzend. Außerdem sind Spritzbrühen von Spritzpulvern wenig stabil, was die Homogenität der verdünnten wäßrigen Suspension anbelangt. Die suspendierten Wirkstoff- und Feststoffteilchen sedimentieren relativ schnell. Nach einer halben Stunde befindet sich häufig nur noch die Hälfte des verrührten Wirkstoffes in Suspension. Dies hat meist eine ungleichmäßige Verteilung der Wirkstoffe auf den Pflanzen zur Folge.

Gießbare, lagerungsstabile wäßrige Suspensionen, die z. B. 20 bis 50 Gew.-% feste Wirkstoffe in feiner Verteilung enthalten können, besitzen diese Nachteile der Spritzpulver nicht. Ihre Herstellung erfolgt durch Vermahlen von groben wäßrigen Wirkstoffsuspensionen in Reibkugel- oder Sandmühlen. Da Filteranlagen nicht benötigt werden, ist der apparative Aufwand nicht besonders kostspielig. Dafür ist gegenüber Spritzpulvern und emulgierbaren Konzentraten die Entwicklung von wirklich lagerungsstabilen und für die Praxis geeigneten Suspensionskonzentraten ungleich schwieriger.

Emulgierbare Konzentrate und Spritzpulver liegen praktisch als Einphasensysteme vor und können z. B. in Form einer Lösung oder eines pulverförmigen Produktes verhältnismäßig problemlos gelagert werden. Sie müssen lediglich zum Zeitpunkt der Anwendung nach dem Verdünnen mit Wasser für kurze Zeit Emulsionen bzw. Suspensionen bilden können, wobei nach internationalen Prüfvorschriften, z. B. für Spritzpulver, in der Spritzbrühe nach einer halben Stunde Stehen noch 50 gew.-% der Wirkstoffteilchen suspendiert sein müssen. Dagegen stellen wäßrige Suspensionskonzentrate fester Wirkstoffe fest-flüssige Zweiphasensysteme dar, in denen auf die festen Wirkstoffteilchen ununterbrochen Kräfte, wie die thermische Molekularbewegung, die Sedimentationskraft und die gegenseitigen Anziehungskräfte, einwirken. Wenn Suspensionskonzentrate aber in der Praxis einsetzbar sein sollen, müssen sie über 2 Jahre lagerungsstabil sein, d. h. die Feinverteilung der Wirkstoffteilchen muß mindestens über diesen Zeitraum erhalten bleiben und gewährleistet sein. Die Dispersion muß gießfähig bleiben. Verdickungen der Suspension, Sedimente, die nicht spontan aufzuschütteln sind, müssen ausgeschlossen werden. Von Natur aus sind derartige Zweiphasensysteme instabil und neigen zur Entmischung, die sich mit zunehmender Lagerungszeit und -temperatur verstärkt. In vielen Fällen verfestigen sich Dispersionen und bilden zähe Sedimente, die in der überstehenden Flüssigkeit nicht mehr redispergierbar sind. Oft werden die dispergierten Wirkstoffteilchen schlagartig ausgeflockt, wenn man die Suspensionskonzentrate mit anderen Pestizidpräparaten mischt. Dies ist besonders dann der Fall, wenn die zugemischten Mittel Salze enthalten oder die Wirkstoffe selbst Salzcharakter besitzen, beispielsweise in Form von carbonsauren Salzen oder als Phenolate vorliegen bzw. eingesetzt werden. Solche Ausflockungen können z. B. bei dem Zumischen von pestiziden Mitteln zu verdünnten, anwendungsfertigen Spritzbrühen von pestiziden Suspensionskonzentraten eintreten, aber auch, gegebenenfalls mehr oder weniger verzögert, bereits bei der Lagerung von Suspensionskonzentraten fester Wirkstoffe, denen derartige Wirkstoffsalze oder -phenolate zugemischt wurden, stattfinden. Dies gilt besonders für die vorstehend beschriebenen Suspensionskonzentrate mit Wirkstoffkombinationen von Isoproturon mit Mecoprop, Bromoxynil und Ioxynil, für die in der Praxis ein erheblicher Bedarf besteht.

In Suspensionskonzentraten können sich zeit- und temperaturabhängige Prozesse abspielen, die die Qualität des Produktes beeinflussen. Nach theoretischen Vorstellungen sollte eine Suspension dann stabil sein, wenn ihr aus einer Vielzahl von Dispergier-, Netz- und viskositäts-verändernden Mitteln die für den speziellen Anwendungszweck geeigneten in der richtigen Konzentration einverleibt werden können und diese auf den zu dispergierenden Teilchen aufziehen und sie elektrostatisch gleichsinnig optimal aufladen, so daß die dadurch hervorgerufenen gegenseitigen Abstoßungskräfte die enorm starken und mit zunehmender Feinheit der Teilchen größer werdenden Van der Waals'schen Anziehungskräfte überwinden können. Mit zunehmender Feinheit der Teilchen kann man andererseits durch deren entsprechend steigende thermische Mobilität der Sedimentationskraft entgegenwirken. Durch zunehmende gleichsinnige elektrostatische Aufladung der Partikel wird eine verstärkte Polarisation der umgebenden Wassermoleküle hervorgerufen. Dies hat zur Folge, daß sich um die Wirkstoffteilchen auch eine zunehmend dickere Hydrathülle polarisierter Wassermoleküle anlagert, die bewirkt, daß die Viskosität der Suspension absinkt und das Produkt besser gießfähig wird. Bewirken geeignete oberflächenaktive Agenzien, daß die Hydrathülle auch bei steigenden Lagerungstemperaturen beibehalten wird, so werden die zwischen den Teilchen wirksamen Anziehungskräfte trotz zunehmender thermischer Mobilität weiterhin abgeschirmt. Sind die Teilchen dagegen nicht völlig gleichsinnig aufgeladen oder durch Überschüsse von oberflächenaktiven Agenzien bereits zum Teil wieder entladen worden, so kann eine bei Normaltemperatur stabile Dispersion bei höheren Lagerungstemperaturen im Laufe der Zeit verdicken oder zähe, nicht dispergierbare Sedimente bilden, indem in diesen Fällen bei der mit zunehmender Lagerungstemperatur zunehmenden Beweglichkeit der Wirkstoffpartikel die Energie der letzteren ausreicht, sich infolge der weniger gut ausgebildeten Hydrathüllen soweit zu nähern, daß ihre Anziehungskräfte wirksam werden können. Es kommt zu Thixotropieerscheinungen und zeitabhängigen Umschichtungen der Hydrathüllen, wodurch die Dispersion instabiler wird. Dies sind theoretische Vorstellungen, die derartige zeitabhängige Vorgänge erklären helfen sollen, in Wirklichkeit sind die Vorgänge ungleich vielschichtiger und Meßmethoden, wie z. B. die des Zeta-Potentials zur Ermittlung einer optimalen Partikel-Aufladung sind für konzentrierte Dispersionen nicht aussagefähig. Ähnliches gilt auch für die Entwicklung von sehr niedrigviskosen Dispersionsformulierungen. Denn wie die Praxis zeigt, ist es aufgrund der Heterogenität der anzuwendenden Kriterien bereits schwierig, aus einer Vielzahl von Formulierungsansätzen zunächst diejenigen zu ermitteln, die für eine Einbeziehung in weitere langwierige Stabilitätsprüfungen geeignet sein könnten.

Es ist weiterhin bekannt, daß man sich bei der Entwicklung von lagerungsbeständigen, gießbaren Dispersionspräparaten unter Verwendung von technischen Wirkstoffqualitäten keinesfalls nur auf das Suspensionsverhalten einer einzelnen Produktionscharge stützen kann, da geringfügige Änderungen der Anteile von Nebenkomponenten in den einzelnen Wirkstoffchargen die Stabilität der daraus hergestellten Dispersionen entscheidend beeinträchtigen können. Man muß daher vielmehr die nach zahlreichen Formulierungsversuchen schließlich optimierte Zusammensetzung auch noch an zahlreichen verschiedenen technischen Wirkstoffchargen auf Reproduzierbarkeit überprüfen und die Formulierung nötigenfalls modifizieren oder gegebenenfalls grundlegend überarbeiten. Die Formulierung von Suspensionskonzentraten des Isoproturons stellt diesbezüglich ein erwähnenswertes Beispiel dar. So kann großtechnisch hergestelltes Isoproturon z. B. je nach Herstellungsverfahren und angewandten Reinigungsmethoden beispielsweise entweder 97 Gew.-% Reinwirkstoff neben ca. 2 Gew.-% ortho- und 1 Gew.-% meta-Isomeren, oder 97 Gew.-% Reinwirkstoff neben 1,5 bis 3 Gew.-% meta- und bis zu 1 gew.-% ortho-Isomeren enthalten. Das Auffinden von lagerungsstabilen Dispersionszusammensetzungen wird durch solche an sich geringfügigen Qualitätsschwankungen des Isoproturons bereits außerordentlich erschwert. Die diesbezüglichen Schwierigkeiten werden noch verstärkt, wenn man Isoproturon mit ebenfalls technischen Wirkstoffqualitäten von Ioxynil, Bromoxynil, Mecoprop oder deren Salzen, wie z. B. den Alkali- oder Aminsalzen kombiniert formuliert.

Es hat sich gezeigt, daß Zusammensetzungen von Dispersionen oder Verfahren zu deren Herstellung, wie sie in der Literatur beschrieben sind, bei ihrer Anwendung auf die Formulierung von Suspensionskonzentraten des Isoproturons oder von Kombinationen des Isoproturons mit Ioxynil, Bromoxynil und Mecoprop nicht zu lagerungsstabilen Produkten führen. So kann durch Einsatz von partiell hydrolysierten Polyvinylacetaten, z. B. entsprechend der US-PS 40 71 617 die Suspendierbarkeit von Isoproturon nicht verbessert werden. Es zeigen sich zudem in gelagerten Dispersionen verstärkt zähe Sedimentbildungen, die nicht redispergierbar sind. Das gilt auch, wenn nichtionische Emulgatoren, Pflanzengummen und anionische oberflächenaktive Mittel zur Formulierung eingesetzt werden, z. B. entsprechend US-PS 3 948 636 oder GB-PS 1 480 110. Nichtionische Emulgatoren, die Polyglykoläthergruppierungen enthalten und z. B. in Mengen ab etwa 2 Gew.-% eingesetzt werden,

3

können außerdem ein Kristallwachstum bei dem relativ schwer wasserlöslichen Isoproturon verursachen. Die Verwendung von blockcopolymeren Polyätherglykolen, wie sie z. B. durch Addition von Äthylenoxyd an ein Kondensationsprodukt aus Propylenoxyd und Propylenglykol gewonnen werden können, neben Dispergiermitteln, auch unter Zusatz von Kieselsäuren, z. B. entsprechend DE-OS 2 547 968 oder DE-OS 2 651 046 führt zu Dispersionen, die bei der Lagerung zu schnittfesten Produkten erstarren. Die genannten blockcopolymeren Polyätherglykole bewirken außerdem gewisse Umkristallisationen der suspendierten Wirkstoffteilchen unter Bildung von gröberen Partikeln. Isoproturon enthaltende Suspensionskonzentrate, die polycarboxylierte Vinylpolymere, wie z. B. Polymethacrylate enthalten, scheiden zähe Sedimente ab, beispielsweise wenn man Isoproturon entsprechend der US-PS 3 060 084 formuliert. Unbrauchbare, nicht lagerungsstabile Suspensionskonzentrate, die während der Lagerung bei höheren Temperaturen, z. B. bei 50°C verdicken, erhält man auch, wenn man Isoproturon z. B. gemäß der DE-OS 2 651 046 formuliert. Auch Dispersionen, die z. B. entsprechend der US-PS 3 157 486 als Formulierungshilfsmittel Ligninsulfonate und gemäß den ausgewiesenen Beispielen keine weiteren Netzmittel enthalten, sind nicht lagerungsstabil.

Die in Rede stehenden Suspensionskonzentrate sind häufig in den zu ihrer Herstellung benötigten Reibkugel- oder Sandmühlen nicht ausreichend mahlfähig. Dies kann besonders bei solchen Formulierungen der Fall sein, deren Viskositäten stark derart temperaturabhängig sind, daß die Suspensionen bei Temperaturen zwischen etwa 35 und 55°C zunehmend verdicken. Solche Temperaturen werden aber in technischen Produktionsmahlanlagen leicht erreicht, selbst wenn deren Kühlmantel mit Wasser gekühlt wird. Die bei der Zerkleinerung des Mahlgutes frei werdende Wärme verursacht bei den genannten Formulierungen eine Viskositätszunahme, was wiederum zu einer Verschlechterung der Wärmeabgabe des Mahlansatzes an das im Kühlmantel strömende Wasser führt, so daß die Temperatur des Mahlgutes rasch weiter ansteigen und leicht 90°C erreichen kann, wobei Dispersionen häufig völlig fest werden können oder sogar die Schmelzpunkte niedrig schmelzender Wirkstoffe erreicht bzw. überschritten werden können.

Man erhält beispielsweise derartige mit zunehmender Temperatur sich verdickende Isoproturon-Dispersionen oder solche, die sich im Stabilitäts-Lagerungstest bei 50°C nach Tagen oder Wochen verfestigen und nicht redispergierbare Sedimente bilden, wenn man herkömmliche Dispergiermittel, wie z. B. Natriumsalze von Ligninsulfonsäuren, Natriumsalze von Kondensationsprodukten aus Formaldehyd mit Natriumsulfit und Phenol bzw. Nonylphenol bzw. Naphthol bzw. Naphthalinsulfonsäuren, ferner Netzmittel, wie z. B. Natriumsalze von Alkylbenzolsulfonsäuren oder von Alkylschwefelsäuren oder von Butylnaphthalinsulfonsäuren, ferner Fettalkoholpolyglykoläther oder blockcopolymere Polyätherglykole zu ihrer Formulierung einsetzt.

Es wurde nun gefunden, daß man flüssige, herbizide Mittel in Form von wäßrigen, lagerungsstabilen Suspensionskonzentraten, die auch bei höheren Temperaturen gut gießfähig bleiben und die als Wirkstoff Isoproturon oder Mischungen aus Isoproturon mit Ioxynil, Bromoxynil, Mecoprop oder Salzen der letzteren drei Wirkstoffe sowie Formulierungshilfsmittel enthalten, dadurch erhalten kann, daß man als Formulierungshilfsmittel ein Alkalisalz, vorzugsweise das Natriumsalz, eines Kondensationsproduktes aus einem sulfogruppenhaltigen Phenol und Formaldehyd oder aus einem Phenol, Alkalisulfit und Formaldehyd, sowie Alkalisalze, Ammoniumsalze oder Aminsalze, vorzugsweise Natriumsalze, von Alkylpolyglykolätherphosphat-Partialestern, insbesondere Mono- oder Di-(alkylpolyglykoläther)-phosphate, deren Alkylpolyglykolätherreste aus gegebenenfalls substituierten Alkylgruppen, die auch Doppelbindungen enthalten können, mit vorzugsweise 6 bis 24, insbesondere 12 bis 18 C-Atomen, und Polyglykoläthergruppen mit vorzugsweise bis zu 20, insbesondere 4 bis 12 Äthylenoxydeinheiten (= AeO-Einheiten) pro Rest bestehen, einsetzt, wobei die Phosphorsäurepartialestersalze den Suspensionskonzentraten im Temperaturbereich von 10 bis 70°C, insbesondere 20 bis 60°C einen Temperatur-Viskositätskoeffizienten von etwa 0,6 bis 0,95 verleihen, berechnet auf Temperatursteigerungen in 20°C-Intervallen, wodurch die Viskositäten der Suspensionskonzentrate mit ansteigender Temperatur reversibel abnehmen.

Als Alkylpolyglykolätherphosphat-Partialestersalze kommen vorzugsweise Orthophosphorsäuremono- oder -diestersalze, insbesondere Gemische aus den beiden Partialestersalzen zur Anwendung. Bevorzugt sind die Alkalisalze, insbesondere die Natriumsalze. Die Herstellung der erfindungsgemäß eingesetzten Alkylpolyglykolätherphosphat-Partialestersalze, die an sich bekannt sind, kann nach bekannten Methoden erfolgen.

Als Aminsalze kommen gegebenenfalls z. B. die Salze mit Mono-, Di- oder Tri(C$_1$ – C$_4$)alkylaminen oder mit Mono-, Di- oder Tri-(C$_1$ – C$_4$)alkanolaminen infrage.

Bevorzugt kommen z. B. die Alkalisalze, insbesondere die Natriumsalze beispielsweise von Mono- oder Diestern der Orthophosphorsäure mit Polyglykoläthern von höheren Alkoholen oder von Fettalkoholen, wie z. B. Kokosfettalkohol, Wachsalkoholen oder synthetischen Alkoholen mit Polyglykoläthergruppen von bis zu 20, vorzugsweise 2 bis 20, insbesondere 4 bis 12 AeO-Einheiten zur Anwendung. Auch die Verwendung von Phosphorsäurepartialestersalzen mit Alkylpolyglykolätherresten aus ungesättigten höheren Alkoholen oder ungesättigten Fettalkoholen kann in manchen Fällen vorteilhaft sein. Die Alkylgruppen können auch substituiert sein, z. B. durch Alkoxy oder Halogen. Bevorzugt sind jedoch nichtsubstituierte Alkylgruppen. Auch Gemische aus verschiedenen Phosphorsäurepartialestersalzen können eingesetzt werden.

4

Die Einsatzmenge an Phosphorsäurepartialestersalzen beträgt erfindungsgemäß vorzugsweise etwa 0,5 bis 8 Gew.-%, bezogen auf das fertige Suspensionskonzentrat. Es können aber auch darunter oder darüber liegende Mengen eingesetzt werden, was im allgemeinen jedoch keine besonderen Vorteile bringt.

Handelsübliche Phosphorsäurepartialestersalze der vorstehend genannten Art sind z. B. unter den Namen Forlanit P und Forlanon (Fa. Henkel KGaA), erhältlich.

Erfindungsgemäß können die genannten Phosphorsäurepartialestersalze den beanspruchten herbiziden und Isoproturon enthaltenden Suspensionskonzentraten in dem Temperaturbereich von 10 bis 70°C, insbesondere 20 bis 60°C einen Temperatur-Viskositätskoeffizienten von etwa 0,6 bis 0,95, berechnet auf Temperatursteigerungen in 20°C-Intervallen, vermitteln.

Unter dem Ausdruck Temperatur-Viskositätskoeffizient wird ein Faktor verstanden, der in dem angegebenen Temperaturbereich die bei ansteigender Temperatur in Intervallen von 20°C gemessenen Viskositäten des Suspensionskonzentrates in Beziehung setzt. Dieser Faktor stellt den Quotienten aus der bei der höheren Temperatur ermittelten Viskositätszahl durch die vergleichsweise bei der um 20°C niedrigeren Temperatur gemessenen Viskositätszahl des Suspensionskonzentrates dar. Ist der Temperatur-Viskositäts-Koeffizient kleiner als 1, so nimmt die Viskosität des jeweiligen Suspensionskonzentrates mit ansteigender Temperatur ab, ist er größer als 1, so steigt die Viskosität an.

Es läßt sich an vergleichbaren Formulierungen zeigen, daß z. B. ein Ersatz der Alkylpolyglykolätherphosphat-Partialestersalze durch entsprechende Anteile vergleichbarer Alkylphosphat-Partialestersalze, deren Alkylreste keine Polyglykoläthergruppen aufweisen (vgl. Vergleichsbeispiel 1), oder durch vergleichbare Tris-(alkylpolyglykoläther)-phosphate, die keiner Salzbildung mehr fähig sind, (vgl. Vergleichsbeispiel 2) zum völligen Verlust der überraschenden und vorteilhaften Eigenschaften erfindungsgemäßer Suspensionskonzentrate, wie z. B. Lagerungsstabilität, Gießfähigkeit und Temperatur-Viskositäts-Koeffizient von $< 1$ führen.

Die erfindungsgemäß eingesetzten Alkalisalze von sulfogruppenhaltigen Kondensationsprodukten aus Phenolen und Formaldehyd sind an sich ebenfalls bekannt und in der DE-OS 1 945 100 beschrieben, ebenso ihre Herstellung. Letztere kann beispielsweise sowohl durch Umsetzung von phenolischen Komponenten mit Formaldehyd und Alkalisulfit bzw. Alkalibisulfit im alkalischen Bereich, als auch durch entsprechende Umsetzung von kernsulfonierten phenolischen Komponenten mit Formaldehyd erfolgen. Die dabei erhaltenen stark alkalischen Kondensationsprodukte können vorteilhaft mit einer Säure, z. B. Schwefelsäure, neutral gestellt werden, was wegen der Alkaliempfindlichkeit vieler biocider Wirkstoffe von Bedeutung sein kann. Das Molverhältnis von phenolischer Komponente zu Formaldehyd beträgt in den Kondensationsprodukten vorzugsweise etwa 1 : 1,3 bis 1 : 2,5. Für die Kondensationsreaktion werden als phenolische Komponenten z. B. sulfogruppenhaltige einkernige Phenole, insbesondere durch niedere Alkylreste substituierte Phenole, oder sulfogruppenhaltige zweikernige, nichtkondensierte mono- oder bifunktionelle Phenole oder deren Gemische und Formaldehyd, oder die entsprechenden sulfogruppenfreien Phenole, Formaldehyd und Alkalisulfit bzw. -bisulfit eingesetzt. Bevorzugte Alkalisalze sind die Natriumsalze. Bevorzugte phenolische Komponenten sind z. B. kernsulfonierte und durch niedere Alkylgruppen kernsubstituierte Phenole, insbesondere kernsulfonierte Kresole oder die entsprechenden sulfogruppenfreien Alkylphenole oder Kresole. Auch Gemische aus phenolischen Komponenten können eingesetzt werden.

Die Einsatzmenge an Alkalisalzen der sulfogruppenhaltigen Phenol-Formaldehyd-Kondensationsprodukte beträgt erfindungsgemäß vorzugsweise etwa 1 bis 10 Gew.-%, bezogen auf das fertige Suspensionskonzentrat. Es können aber auch darunter oder darüber liegende Mengen eingesetzt werden, was im allgemeinen jedoch keine besonderen Vorteile bringt.

Gegenstand der Erfindung sind insbesondere flüssige, herbizide Mittel in Form von wäßrigen Suspensionskonzentraten, enthaltend als Wirkstoff Isoproturon oder Mischungen aus Isoproturon mit Ioxynil, Bromoxynil, Mecoprop oder Salzen der letzteren drei Wirkstoffe sowie Formulierungshilfsmittel, dadurch gekennzeichnet, daß sie

| | |
|---|---|
| 15 bis 60 Gew.-% | Isoproturon |
| 0 bis 42 Gew.-% | Ioxynil, Bromoxynil, Mecoprop oder deren Salze, |
| 2 bis 10 Gew.-% | Alkalisalze von sulfogruppenhaltigen Kondensationsprodukten aus einem Phenol und Formaldehyd, |
| 0,5 bis 8 Gew.-% | Alkalisalze von $(C_6 - C_{24})$-Alkylpolyglykoläther-(2 – 20 AeO)-phosphat-Partial-estern, |
| 0 bis 0,4 Gew.-% | Alumosilikat mit Blattstruktur |
| 0,2 bis 2 Gew.-% | Entschäumer |
| 0 bis 10 Gew.-% | Antigefriermittel |
| Rest zu 100 Gew.-% | Wasser |

enthalten.

Als Alumosilikate mit Blattstruktur können die üblicherweise als Suspendierhilfsmittel verwendeten Produkte, wie z. B. Montmorillonite oder Bentonite eingesetzt werden.

Als Entschäumer werden übliche Produkte auf der Basis von Tributylphosphat oder auf Silikonbasis eingesetzt, wobei die letzteren bevorzugt sind.

Als Antigefriermittel kommen übliche, den Gefrierpunkt von Wasser herabsetzende Mittel infrage, wie z. B. Äthylenglykol, Propylenglykol, Glycerin. Bevorzugt wird Äthylenglykol eingesetzt.

Als Wasserkomponente für die Herstellung der Suspensionskonzentrate kann z. B. übliches Trinkwasser oder Brauchwasser eingesetzt werden, vorzugsweise solches von 20°dH (=deutsche Härte), es kann aber auch entsalztes Wasser verwendet werden.

Die erfindungsgemäßen Suspensionskonzentrate sind dünnflüssig und gut gießfähig, insbesondere wenn sie bis zu 50 gew.-% Wirkstoff oder Wirkstoffgemisch enthalten. Sie behalten ihre Dünnflüssigkeit nicht nur beim Erwärmen bei, sondern sie werden bei Temperaturerhöhung überraschenderweise reversibel dünnflüssiger, ohne daß die Suspendiereigenschaften und die Verdünnbarkeitseigenschaften dabei verlorengehen, was z. B. besonders bei der Lagerung und Anwendung in heißen Klimazonen von Wichtigkeit sein kann. Erfindungsgemäß zusammengesetzte Produkte lassen sich gut vermahlen, sind trotz ihrer relativ niedrigen Viskositäten überraschenderweise ausgezeichnet lagerungsstabil, besitzen sehr gute Benetzbarkeiten und Verdünnbarkeitseigenschaften beim Abschwächen auf Spritzbrühkonzentrationen durch Verdünnen mit Wasser und zeigen hervorragende Verträglichkeiten gegenüber Kombinationspräparaten, die zwecks Verbreiterung des biologischen Wirkungsspektrums den anwendungsfertigen, verdünnten Spritzbrühsuspensionen häufig zugesetzt werden.

Der Wirkstoffgehalt in den erfindungsgemäßen Suspensionskonzentraten beträgt vorzugsweise 15 bis 60 Gew.-%, insbesondere 20 bis 50 Gew.-%, davon mindestens 18 Gew.-% Isoproturon, wenn in der Formulierung zusätzlich Ioxynil, Bromoxynil, Mecoprop oder deren Salze enthalten sind. Als Salze der letzteren 3 Wirkstoffe kommen vorzugsweise deren wasserlösliche Salze zur Anwendung, insbesondere Alkalisalze oder Aminsalze, z. B. aus Aminen mit niederen Alkylgruppen oder Alkanolgruppen.

Die Herstellung der Suspensionskonzentrate erfolgt z. B. in der Weise, daß man Isoproturon mit den erfindungsgemäß gegebenenfalls zuzumischenden übrigen Wirkstoffen in der wäßrigen Lösung bzw. gegebenenfalls Suspension der Formulierungshilfsmittel verrührt und diese grobteilige Suspension beispielsweise durch Vermahlen in einer Korund- oder Zahnscheibenmühle auf Feinheiten von etwa 200 Mikron gegebenenfalls vorzerkleinert und anschließend in Reibkugelmühlen oder Sandmühlen fein mahlt, wobei Isoproturon sowie die übrigen Partikel der Suspension in Teilchengrößen von 0,1 – 15 Mikron, in der Hauptmenge unter 5 Mikron erhalten werden. Die Feinheitsmessungen werden mittels einer Scheibenzentrifuge oder mit einem Coulter-Counter-Zählgerät durchgeführt.

Die Applikation der Mittel z. B. in der Landwirtschaft bzw. auf dem Felde erfolgt auf einfache Weise dadurch, daß man die Suspensionskonzentrate, die Isoproturon enthalten, entsprechend der vorgeschriebenen Aufwandmenge dem Verdünnungswasser zugibt, kurz verrührt und in wirksamen Mengen auf die Pflanzen appliziert. Die verdünnten wäßrigen Spritzsuspensionen zeichnen sich gegenüber den vergleichsweise aus Spritzpulvern oder emulgierbaren Konzentraten hergestellten Spritzbrühen besonders dadurch aus, daß sie selbst nach 24 Stunden Stehen den Wirkstoff noch nahezu gleichmäßig verteilt enthalten. Spritzpulversuspensionen entmischen sich dagegen sehr schnell, nach einer Standzeit von einer halben Stunde hat sich sehr oft die Hälfte des Wirkstoffes bereits abgesetzt. Ebenso scheiden Emulsionen nach 1—4 Stunden Stehen die emulgierten Konzentrate wieder ölig oder cremig aus.

Die erfindungsgemäßen, Isoproturon enthaltenden Suspensionskonzentrate zeigen darüber hinaus in den anwendungsfertigen Spritzbrühen überraschenderweise eine ausgezeichnete physikalische Verträglichkeit mit bekannten Insektizid- und Fungizid-Präparaten, die in Form von Spritzpulvern oder emulgierbaren Konzentraten der anwendungsfertigen Spritzbrühe zugemischt werden können.

Die Erfindung wird durch die nachstehenden Beispiele erläutert.

## Beispiel 1

Ein fließfähiges, wäßriges Suspensionskonzentrat folgender Zusammensetzung wird durch Vermahlen der Bestandteile in einer Reibkugelmühle mit Glaskugeln von 2 mm $\varnothing$ hergestellt:

| | |
|---|---|
| 50,0 Gew.-% | Isoproturon |
| 6,0 Gew.-% | Natriumsalz eines Kresol-Formaldehyd-Natriumsulfit-Kondensates |
| 3,0 Gew.-% | Natriumsalz von $(C_{12}-C_{18})$Alkylpolyglykolätherphosphat mono-/-diester (Forlanit P, Henkel KGaA) |
| 0,2 Gew.-% | Alumosilikat-Pulver (Montmorillonit) |
| 1,0 Gew.-% | Silicon-Entschäumer (SE 2, Wacker GmbH) |
| 4,0 Gew.-% | Äthylenglykol |
| 35,8 Gew.-% | Wasser |

Die Dispersion wird auf eine solche Feinheit vermahlen, daß 90 Gew.-% der suspendierten Teilchen einen Durchmesser von unter 5 Mikron besitzen, gemessen mit einem Coulter-Counter Meßgerät.

Gießt man 2 ml des Suspensionskonzentrates in 99 ml Wasser, so erhält man eine sich spontan bildende Suspensionsverdünnung, die eine Oberflächenspannung von $36-42$ dyn/cm$^{-1}$ bei 20°C besitzt und aus der selbst nach 12stündigem Stehen nur Spuren von sedimentierten Teilchen sichtbar werden. Im Gegensatz zu vergleichbaren Spritzpulvern beträgt hier die Suspendierbarkeit annähernd 100%, ermittelt nach den CIPAC-Prüfbestimmungen.

Die Dispersion ist leicht gießfähig und bleibt auch nach 3 Monaten Lagerung bei 0 und 50°C stabil. Nach den Lagerungstests sind lediglich 0,3 Vol.-% eines Bodenabsatzes der Dispersion feststellbar, der durch zweimaliges Schütteln spontan redispergierbar ist. Ein Kristallwachstum der Isoproturon-Partikel ist nicht feststellbar. Mit Zunahme der Lagerungstemperatur um jeweils 20°C von 20 auf 60°C wird die Dispersion reversibel dünnflüssiger ohne daß die Stabilität leidet.

Die Bestimmung der Temperatur-Viskositätskoeffizienten erfolgt durch Messungen der Viskositäten des Suspensionskonzentrates mittels eines Brookfield-Viskosimeters bei Temperaturen von 20, 40 und 60°C. Hierzu wird die Suspension zunächst von eingeschlossenen Luftbläschen befreit, indem sie in einem Rundkolben unter einem reduzierten Druck von 20 mm Wassersäule 30 Minuten auf einem Vibrationsapparat gerüttelt wird. Die Dispersion wird dann in das Meßgerät des Brookfield-Viskosimeters gefüllt und mittels eines Thermostaten auf Temperaturen von 20, 40 und 60°C erwärmt. Die Viskositätsmessungen werden mittels der Spindel 2 bei 2,5 sowie bei 10 Umdrehungen/Minute durchgeführt. Das Ergebnis ist nachstehend zusammengestellt:

| Brookfield-Viskosimeter | Meßbedingungen | Viskosität (mPa · s) (gemessen) | Temperatur-Viskositäts-koeffizient im ansteigenden 20°C-Intervall (errechnet) |
|---|---|---|---|
| Spindel 2 | 2,5 U/Min. bei 20°C | 6320 | |
| | | | 0,675 |
| | 2,5 U/Min. bei 40°C | 4272 | |
| | | | 0,640 |
| | 2,5 U/Min. bei 60°C | 2736 | |
| Spindel 2 | 10 U/Min. bei 20°C | 1924 | |
| | | | 0,748 |
| | 10 U/Min. bei 40°C | 1440 | |
| | | | 0,638 |
| | 10 U/Min. bei 60°C | 920 | |

Die Viskositäten des Suspensionskonzentrates nehmen mit steigender Temperatur ab. Die Temperatur-Viskositätskoeffizienten gleichen in etwa denen von Wasser. Der ermittelte Koeffizient gibt so einen Hinweis darauf, daß die Hydrathülle, die die einzelnen Teilchen umgibt, überraschend stabil ist, auch bei zunehmenden Temperaturen. Andernfalls würde die Viskosität durch die zunehmend wirksamen Anziehungskräfte zwischen den suspendierten Partikeln ansteigen.

## Beispiel 2

Analog dem Beispiel 1 wird in einer Reibkugelmühle mit Glaskugeln von 2 mm ⌀ unter Vermahlen der Bestandteile auf eine Teilchenfeinheit von ca. 5 Mikron ein Suspensionskonzentrat folgender Zusammensetzung hergestellt:

| | |
|---|---|
| 20,00 Gew.-% | Isoproturon |
| 40,00 Gew.-% | Mecoprop-Natriumsalz (U 46 KV-Pulver, BASF AG) |
| 2,00 Gew.-% | Natriumsalz eines Kresol-Formaldehyd-Natriumsulfit-Kondensates |
| 4,00 Gew.-% | Natriumsalz von $(C_{12}-C_{18})$-Alkylpolyglykolätherphosphatmono-/-diester (Forlanit P, Henkel KGaA) |
| 1,00 Gew.-% | Silicon-Entschäumer (SE 2, Wacker GmbH) |
| 0,05 Gew.-% | Alumosilikat-Pulver (Bentonit) |
| 32,95 Gew.-% | Wasser |

7

Das resultierende Suspensionskonzentrat besitzt eine hervorragende Lagerungsstabilität, auch bei Langzeitlagerungen bei 50°C. Es ist leicht gießfähig. Seine Viskosität nimmt mit zunehmender Temperatur ab. Das Ergebnis der Viskositätsbestimmungen in den 20°C-Intervallen, durchgeführt wie in dem Beispiel 1 beschrieben, ist nachstehend zusammengefaßt:

| Brookfield-Viskosimeter | Meßbedingungen | Viskosität (mPa · s) (gemessen) | Temperatur-Viskositäts-koeffizient im ansteigenden 20°C-Intervall (errechnet) |
|---|---|---|---|
| Spindel 2 | 2,5 U/Min. bei 20°C | 4224 | |
| | | | 0,90 |
| | 2,5 U/Min. bei 40°C | 3805 | |
| | | | 0,91 |
| | 2,5 U/Min. bei 60°C | 3492 | |
| Spindel 2 | 10 U/Min. bei 20°C | 1326 | |
| | | | 0,89 |
| | 10 U/Min. bei 40°C | 1178 | |
| | | | 0,87 |
| | 10 U/Min. bei 60°C | 1020 | |

### Beispiel 3

Analog dem Beispiel 1 wird mittels einer Reibkugelmühle mit Glaskugeln von 2 mm $\varnothing$ unter Vermahlen der Bestandteile auf eine Teilchen-Feinheit von ca. 5 Mikron ein Suspensionskonzentrat folgender Zusammensetzung hergestellt:

| | |
|---|---|
| 30,00 Gew.-% | Isoproturon |
| 10,00 Gew.-% | Ioxynil |
| 3,00 Gew.-% | Natriumsalz eines sulfogruppenhaltigen Phenol-Formaldehyd-Kondensationsproduktes |
| 6,00 Gew.-% | Natriummono-/di-Laurylpolyglykoläther (10 AeO)-phosphat |
| 1,00 Gew.-% | Silicon-Entschäumer (SE 2, Wacker GmbH) |
| 0,05 Gew.-% | Alumosilikat-Pulver (Montmorillonit) |
| 49,95 Gew.-% | Wasser |

Das resultierende Suspensionskonzentrat ist niedrig viskos und leicht gießbar und zeigt nach einer Lagerung von 3 Monaten bei 50°C praktisch keine Sedimentabscheidungen.

Die Temperatur-Viskositätskoeffizienten, gemessen in den 20°C-Intervallen wie in dem Beispiel 1 beschrieben, liegen zwischen 0,8 und 0,92.

### Beispiel 4

Analog dem Beispiel 1 wird mittels einer Reibkugelmühle mit Glaskugeln von 2 mm $\varnothing$ unter Vermahlen der Bestandteile auf eine Teilchen-Feinheit von ca. 5 Mikron ein Suspensionskonzentrat folgender Zusammensetzung hergestellt:

| | |
|---|---|
| 35,00 Gew.-% | Isoproturon |
| 10,00 Gew.-% | Bromoxynil-Natriumsalz |
| 2,00 Gew.-% | Natriumsalz eines Kresol-Formaldehyd-Natriumsulfit-Kondensates |
| 3,00 Gew.-% | Natriummono-/di-($C_{12}-C_{18}$)-Alkylpolyglykoläther (4 – 12 AeO)-Phosphat |
| 1,00 Gew.-% | Silicon-Entschäumer (SE 2, Wacker, GmbH) |
| 0,05 Gew.-% | Alumosilikat-Pulver (Bentonit) |
| 48,95 Gew.-% | Wasser |

Das resultierende Suspensionskonzentrat ist gut gießfähig und zeigt nach einer Lagerung von 3 Monaten bei 50°C praktisch keine Sedimentation. Die Temperatur-Viskositätskoeffizienten, gemessen in den 20°C-Intervallen wie in dem Beispiel 1 beschrieben, liegen zwischen 0,78 und 0,93.

**0 022 925**

Vergleichsbeispiel 1

Eine Formulierung der Zusammensetzung wie in Beispiel 1 beschrieben, bei der jedoch anstelle des Natriumsalzes von ($C_{12}-C_{18}$)Alkylpolyglykolätherphosphatmono-/-diester (Forlanit P) 3,0 Gew.-% Natrium-mono-/di-($C_{12}-C_{18}$)alkylphosphat (Forlanit F 452, Henkel KGaA) eingesetzt werden, wird, wie in dem Beispiel 1 beschrieben, mittels einer Reibkugelmühle mit Glaskugeln von 2 mm $\emptyset$ zu einem Suspensionskonzentrat mit einer Teilchenfeinheit der Bestandteile von ca. 5 Mikron vermahlen. Während des Mahlvorgangs wird das Gemisch zunehmend viskoser infolge der durch das Mahlen entwickelten Wärme, die eine Temperaturerhöhung auf ca. 50°C bewirkt und auch durch Kühlung mit Wasser von 15°C während des Mahlvorgangs nicht abgeführt werden kann. Nach beendetem Mahlvorgang werden das Gemisch auf Raumtemperatur abgekühlt, die Glaskugeln abgesiebt und das Suspensionskonzentrat geprüft, wie in Beispiel 1 beschrieben. Der Temperatur-Viskositäts-Koeffizient beträgt 1,1 bis 1,2. Im Lagerungstest bei 50°C zeigt das Produkt bereits nach 1 Monat eine Auftrennung in eine überstehende wäßrige Schicht und ein zähes, wirkstoffhaltiges Sediment, das nicht mehr redispergierbar ist.

Vergleichsbeispiel 2

Eine Formulierung analog dem Vergleichsbeispiel 1, bei der jedoch anstelle des Natrium-mono-/di-($C_{12}-C_{18}$)alkylphosphats (Forlanit F 452) 3,0 Gew.-% Tris-(dodecyltetraglykoläther)-phosphat eingesetzt werden, wird, wie in dem Vergleichsbeispiel 1 beschrieben, vermahlen und aufgearbeitet. Die Temperatur steigt während des Mahlvorgangs ebenfalls auf ca. 50°C und kann durch Kühlen mit Wasser von 15°C nicht abgeführt werden, da die Viskosität des Gemisches stark ansteigt.

Der Temperatur-Viskositäts-Koeffizient des Suspensionskonzentrates beträgt 1,2 bis 1,4. Im Lagerungstest bei 50°C ist das Produkt bereits nach 1 Monat zu einer zähen, gelartigen, mit Wasser nicht mehr verdünnbaren Masse erstarrt.

**Patentansprüche**

1. Flüssige, herbizide Mittel in Form von wäßrigen Suspensionskonzentraten, die als Wirkstoff Isoproturon oder Mischungen aus Isoproturon mit Ioxynil, Bromoxynil, Mecoprop oder Salzen der letzteren drei Wirkstoffe sowie Formulierungshilfsmittel enthalten, dadurch gekennzeichnet, daß sie als Formulierungshilfsmittel ein Alkalisalz, vorzugsweise das Natriumsalz, eines sulfogruppenhaltigen Kondensationsproduktes aus einem Phenol und Formaldehyd, sowie Alkalisalze, Ammoniumsalze oder Aminsalze, vorzugsweise Natriumsalze, von Alkylpolyglykolätherphosphat-Partialestern, insbesondere Mono- oder Di-(alkylpolyglykoläther)-phosphate, deren Alkylpolyglykolätherreste aus gegebenenfalls substituierten Alkylgruppen, die auch Doppelbindungen enthalten können, mit vorzugsweise 6 bis 24, insbesondere 12 bis 18 C-Atomen, und Polyglykoläthergruppen mit vorzugsweise bis zu 20, insbesondere 4 bis 12 Äthylenoxydeinheiten (=AeO-Einheiten) pro Rest bestehen, enthalten, und die Suspensionskonzentrate im Temperaturbereich von 10 bis 70°C, insbesondere 20 bis 60°C einen Temperatur-Viskositätskoeffizienten von etwa 0,6 bis 0,95, berechnet auf Temperatursteigerungen in 20°C-Intervallen, besitzen.

2. Flüssige, herbizide Mittel nach Anspruch 1, dadurch gekennzeichnet, daß sie 1 bis 10 Gew.-% Alkalisalze eines sulfogruppenhaltigen Kondensationsproduktes aus einem Phenol und Formaldehyd, sowie 0,5 bis 8 Gew.-% Alkalisalze, Ammoniumsalze oder Aminsalze von Alkylpolyglykolätherphosphat-Partialestern enthalten.

3. Flüssige, herbizide Mittel nach Ansprüchen 1 und 2, dadurch gekennzeichnet, daß sie

| | |
|---|---|
| 15 bis 60 Gew.-% | Isoproturon, |
| 0 bis 42 Gew.-% | Ioxynil, Bromoxynil, Mecoprop oder deren Salze, |
| 2 bis 10 Gew.-% | Alkalisalze von sulfogruppenhaltigen Kondensationsprodukten aus einem Phenol und Formaldehyd, |
| 0,5 bis 8 Gew.-% | Alkalisalze von ($C_6-C_{24}$)Alkylpolyglykoläther (2–20 AeO)phosphat-Partialestern, |
| 0 bis 0,4 Gew.-% | Alumosilikat mit Blattstruktur, |
| 0,2 bis 2 Gew.-% | Entschäumer, |
| 0 bis 10 Gew.-% | Antigefriermittel, |
| Rest zu 100 Gew.-% | Wasser, |

enthalten.

4. Flüssige, herbizide Mittel nach Ansprüchen 1 bis 3, dadurch gekennzeichnet, daß sie das Natriumsalz eines sulfogruppenhaltigen Kondensationsproduktes aus Kresol und Formaldehyd sowie die Natriumsalze von Mono- oder Di-($C_{12}-C_{18}$)-alkylpolyglykoläther (4–12 AeO)phosphaten

9

enthalten.

5. Verwendung von herbiziden Mitteln gemäß Ansprüchen 1 bis 4 zur Unkrautbekämpfung.

6. Verfahren zur Bekämpfung von Unkräutern, dadurch gekennzeichnet, daß man auf die von ihnen befallenen Flächen oder Substrate eine herbizid wirksame Menge herbizider Mittel gemäß Ansprüchen 1 bis 4 aus wäßrigen Verdünnungen aufbringt.

**Claims**

1. Liquid, herbicidal agents in the form of aqueous suspension concentrates containing, as the active compound, isoproturon or mixtures of isoproturon with ioxynil, bromoxynil, mecoprop or salts of the last three active compounds and also formulating auxiliaries, which contain, as the formulating auxiliary, an alkali metal salt, preferably the sodium salt, of a condensation product containing sulfo groups and formed from a phenol and formaldehyde, and also alkali metal salts, ammonium salts or amine salts, preferably sodium salts, of alkyl polyglykol etherphosphate partial esters, in particular mono-(alkyl polyglycol ether)-phosphates or di-(alkyl polyglycol ether)-phosphates, the alkyl polyglykol ether radical of which consist of optionally substituted alkyl groups which can also contain double bonds and have preferably 6 to 24 and in particular 12 to 18 C atoms, and polyglycol ether groups having preferably up to 20 and in particular 4 to 12 ethylene oxide units ( = EO units) per radical, the suspension concentrates having a temperature/viscosity coefficient of about 0.6 to 0.95, calculated on temperature increases in 20° C intervals, within the temperature range from 10 to 70° C, in particular 20 to 60° C.

2. Liquid, herbicidal agents as claimed in claim 1, which contain 1 to 10% by weight of alkali metal salts of a condensation product containing sulfo groups and formed from a phenol and formaldehyde, and also 0.5 to 8% by weight of alkali metal salts, ammonium salts or amine salts of alkyl polyglycol ether-phosphate partial esters.

3. Liquid, herbicidal agents as claimed in either of claims 1 and 2, which contain 15 to 60% by weight of isoproturon, 0 to 42% by weight of ioxynil, bromoxynil, mecoprop or salts thereof, 2 to 10% of alkali metal salts of condensation products containing sulfo groups and formed from a phenol and formaldehyde, 0.5 to 8% by weight of alkali metal salts of $(C_6-C_{24})$-alkyl polyglycol ether-$(2-20$ EO)-phosphate partial esters, 0 to 0.4% by weight of an aluminosilicate having a foliate structure, 0.2 to 2% by weight of an anti-foaming agent and 0 to 10% by weight of an anti-freezing agent, the remainder up to 100% by weight being water.

4. Liquid, herbicidal agents as claimed in any one of claims 1 to 3, which contain the sodium salt of a condensation product containing sulfo groups and formed from cresol and formaldehyde and also the sodium salts of mono-$(C_{12}-C_{18})$-alkyl polyglycol ether-$(4-12$ EO)-phosphates or di-$(C_{12}-C_{18})$-alkyl polyglycol ether-$(4-12$ EO)-phosphates.

5. The use of herbicidal agents as claimed in any one of claims 1 to 4 for combating weeds.

6. Process for combating weeds which comprises applying a herbicidally effective quantity of herbicidal agents as claimed in any one of claims 1 to 4 from dilute aqueous solutions to the areas infested by weeds.

**Revendications**

1. Produits herbicides liquides sous la forme de concentrés-suspensions aqueux contenant, comme matière active, de l'isoproturon ou des mélanges d'isoproturon et d'ioxynil, de bromoxynil, de mécoprop ou de sels de ces trois dernières matières actives, ainsi que des adjuvants de formulation, produits caractérisés en ce qu'ils contiennent, comme adjuvants de formulation, un sel de métal alcalin, de préférence le sel sodique, d'un produit de condensation porteur d'un groupe sulfo et dérivant d'un phénol et du formaldéhyde, ainsi que des sels de mètaux alcalins, des sels d'ammonium ou des sels d'amines, de préférence des sels sodiques, d'esters phosphoriques partiels d'éthers alkyl-polyglycoliques, plus particulièrement de phosphates de mono- ou di-(alkyl-polyglycoléthers) dont les radicaux d'éthers alkyl-polyglycoliques sont constitués de radicaux alkyles éventuellement substitués qui peuvent également contenir des doubles liaisons et qui renferment de préférence de 6 à 24 atomes de carbone, plus spécialement de 12 à 18, et de radicaux d'éthers polyglycoliques contenant de préférence au plus 20 motifs éthylène-oxy (en abréviation EO), plus particulièrement de 4 à 12, par radical, et en ce que les concentrés-suspensions présentent, dans l'intervalle de température allant de 10 à 70° C, plus particulièrement de 20 à 60° C, un coefficient de viscosité-température d'environ 0,6 à 0,95 calculé à partir d'augmentations de température dans des intervalles de 20° C.

2. Produits herbicides liquides selon la revendication 1, caractérisés en ce qu'ils contiennent de I à 10% en poids de sels de métaux alcalins d'un produit de condensation, porteur d'un groupe sulfo, obtenu à partir d'un phénol et du formaldéhyde, ainsi que de 0,5 à 8% en poids de sels de métaux alcalins, de sels d'ammonium ou de sels d'amines d'esters phosphoriques partiels d'éthers alkylpolyglycoliques.

3. Produits herbicides liquides selon l'une des revendications 1 et 2, caractérisés en ce qu'ils contiennent:

de 15 à 60% en poids     d'isoproturon,
de 0 à 42% en poids     d'ioxynil, de bromoxynil, de mécoprop ou de leurs sels,
de 2 à 10% en poids     de sels de métaux alcalins de produits de condensation sulfonés dérivant d'un phénol et du formaldéhyde,
de 0,5 à 8% en poids     de sels de métaux alcalins d'esters phosphoriques partiels d'éthers alkylpolyglycoliques contenant de 2 à 20 motifs EO et dont l'alkyle contient de 6 à 24 atomes de carbone,
de 0à 0,4% en poids     d'un aluminosilicate à structure feuilletée,
de 0,2 à 2% en poids     d'un anti-mousse,
de 0 à 10% en poids     d'un anti-gel et
eau qsp 100% en poids.

4. Produits herbicides liquides selon l'une quelconque des revendications 1 à 3, caractérisés en ce qu'ils contiennent le sel sodique d'un produit de condensation crésol/formaldéhyde porteur d'un groupe sulfo, ainsi que les sels sodiques de mono/di-esters phosphoriques d'éthers alkylpolyglycoliques contenant de 4 à 12 motifs EO et dont l'alkyle contient de 12 à 18 atomes de carbone.

5. Application de produits herbicides selon l'une quelconque des revendications 1à 4, pour la lutte contre les plantes adventices.

6. Procédé pour combattre les plantes adventices, caractérisé en ce qu'on applique, sur les surfaces ou substrats touchés par de telles plantes, une quantité efficace, du point de vue herbicide, de produits herbicides selon l'une quelconque des revendications 1 à 4 sous la forme de bouillies diluées à l'eau.